(19) Europäisches Patentamt

European Patent Office

Office européen des brevets

(11) **EP 1 578 159 A1**

(12) **EUROPEAN PATENT APPLICATION**

(43) Date of publication:
**21.09.2005 Bulletin 2005/38**

(51) Int Cl.⁷: **H04Q 7/36**

(21) Application number: **04006708.4**

(22) Date of filing: **19.03.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL LT LV MK**<br><br>(71) Applicant: **SIEMENS AKTIENGESELLSCHAFT**<br>**80333 München (DE)**<br><br>(72) Inventors:<br>• **Ball, Carsten, Dr.**<br>**81373 München (DE)** | • **Ivanov, Kolio, Dr.**<br>**81369 München (DE)**<br>• **Müllner, Robert**<br>**81379 München (DE)**<br>• **Rehfuess, Ulrich**<br>**81475 München (DE)**<br>• **Winkler, Hubert**<br>**2732 Willendorf (AT)** |

(54) **Method for assigning transmission parameters to mobile stations in a radio communication system**

(57)     The method for assigning transmission parameters to mobile stations in a radio communication system according to the invention is characterised in that a cell (SC) of a base station is devided into at least two areas (inner,outer), and in that at least one transmission parameter (MAIO,TimeSlot,TS) is assigned to a mobile station (MS) depending on the location of the mobile station (MS) in one of the at least two cell areas (inner,outer, Serving-Sector) of the base station, wherein the assigned at least one transmission parameter (MAIO, TimeSlot,TS) is determined based on the usage of at least one corresponding transmission parameter (MAIO, TimeSlot) in an area (inner,outer) of at least one neighbouring cell (NC1,NC2,Near-Sector).

FIG 1

Legend:
i     MS in inner area
o     MS in outer area

EP 1 578 159 A1



**EP 1 578 159 A1**

**Description**

Field of the invention

The invention relates to a method and a base station system for assigning transmission parameters to mobile stations, especially for application in mobile radio communications systems.

Background of the invention

A common strategy for capacity enhancement in today's GSM-GPRS/EDGE networks with narrow-band deployment is to use radio link control options (synthesized Frequency Hopping (FH), Power Control (PC) and Discontinuous Transmission (DTX)) with Static MAIO (Mobile Allocation Index Offset) Allocation (SMA). Main prerequisites of this method include Frame Number synchronization of the sectors at each site, assignment of equal Hopping Sequence Numbers (HSNs) to sectors of the same site, splitting the set of MAIOs available at the site (there are as many MAIOs available at the site as the number of hopping frequencies allocated per site) into three subsets (3-sector sites assumed) of different MAIOs for each sector. In most practical deployments, equal MAIO values are statically assigned to all channels of the same transceiver (TRX) while random FH and different HSNs on a site basis are used for a maximum frequency and interference diversity. By appropriate assignment of MAIOs, SMA provides complete control over intra-site adjacent and co-channel interference. However, due to the fixed MAIO allocation to TRXs the maximum fractional load achievable by SMA in each sector is below 33% (due to hard blocking) even if impairment by interference may not be the limiting factor.

To further increase network capacity the number of TRXs installed per site shall be increased over the number of hopping frequencies available, resulting in a MAIO reuse within the site, thus introducing continuous intra-site co-channel interference as well as adjacent channel interference within the same sector, which might degrade the radio quality below an acceptable level. Dynamic MAIO Allocation (DMA) has been introduced to assign an appropriate (Time Slot) TS/MAIO combination to a new call request such that hard blocking encountered in SMA deployments is avoided while intra-site adjacent and co-channel interference can still be controlled. Benefits of DMA occur especially in case of instantaneous inhomogeneous traffic distribution within the site due to efficient utilization of the common MAIO pool at site level.

Unfortunately, both methods SMA and DMA reveal the same drawbacks: inter-site adjacent and co-channel interference cannot be taken into account for the selection of TS/MAIO for the new channel request. Since inter-site interference substantially dominates over intra-site interference, further capacity increase can only be achieved by providing a method capable of reducing and controlling both intra-site and inter-site interference in 1x1 frequency reuse.

DFCA (Dynamic Frequency Channel Assignment), a method proposed in T. Halonen, J. Romero and J. Melero, "GSM, GPRS and EDGE Performance", Wiley & Sons, 2002, claiming to achieve control over inter-site interference in a synchronized network, is based on cyclic FH. Drawbacks of this proposed method are a total loss of interference diversity and degradation in frequency diversity in narrow-band deployments. Furthermore, required computational effort is very high due to real time processing in the network. The network is assumed to have a complete knowledge about interference, power status, codec in use and its requirements, etc., thus optimizing the TS/MAIO allocation of all cells simultaneously.

It is therefore an object of the invention to provide a method and a base station system that enable a capacity increase while controlling intra-site and inter-site interference. This object is addressed by the method and the base station system with the features of the independent claims.

Statement of the invention

According to a first aspect of the invention, a method for assigning transmission parameters to mobile stations in a radio communication system is proposed, wherein a cell of a base station is devided into at least two areas, and wherein at least one transmission parameter is assigned to a mobile station depending on the location of the mobile station in one of the at least two cell areas of the base station,
wherein the assigned at least one transmission parameter is determined based on the usage of at least one corresponding transmission parameter in an area (inner,outer) of at least one neighbouring cell.

Advantageously, the computational effort in the network is substantially reduced in comparison to the above described methods known in the art.

According to a second aspect of the invention, a base station system, consisting for example of a at least one base station and a base station controller, of a radio communication system is provided for implementing the method according to the invention. The at least one neighbouring cell is thereby a cell of the same base station or a cell of a neighbouring base station that is for example connected to the same base station controller.

Brief description of the figures

The invention may be understood more readily, and various other aspects and features of the invention may become apparent from consideration of the following description and the figures as shown in the accompanying drawing sheets, wherein:

FIG 1     depicts a time slot orthogonalisation in mutually interfering cells by distinguishing inner and outer cell areas, and

FIG 2     an examplary MS location distinguishing near/far sectors at the same base station site.

The so called EIR-DMA (Enhanced Interference Reduction DMA) method according to the invention, optimizes network capacity by reducing and controlling both inter-site and intra-site interference. In contrast to the above mentioned DFCA it operates successfully on random hopping systems with burst level synchronization. Frame number offsets between sites must be known. In the following, examples of two strategies for inter-site and intra-site interference reduction are described.

Inter-site interference reduction strategy:

According to the invention, a new concept of concentric MAIO is proposed. The idea behind the concept is, that a mobile station MS at the cell edge forces the BTS (Base Transceiver Station) to transmit with high/full power, thus creating high interference level in the neighbour cells. Hence, to avoid unacceptable link quality degradation in the neighbour cells, the same TS/MAIO combination should be idle or assigned e.g. to a MS located close to its BTS and served at reduced power.

Following the concentric MAIO principle, we distinguish MSs located either in an inner or an outer cell area, wherein the ratio of inner to outer area could be adjusted. The MSs served with reduced power in the inner area are grouped on a certain set of TS, and MSs served with high/full power in the outer area are grouped on another set of TS. Note that a concentric cell is usually configured using TRXs with reduced power for the inner area. In contrast to a concentric cell that uses the proposed method, all TRXs can have the same maximum output power and calls located both in the inner and in the outer area can be assigned on the same TRX. A MS is considered to be in the inner area if:

1. The timing advance (TA) is less than a certain threshold, e.g.
TA < InnOutAreaTAThr .

2. The negative power budget (PBGT) exceeds a certain threshold, e.g.

$$- PBGT = -(RxLevNC - RxLevSC) > InnOutAreaRxLevThr .$$

Both RxLevNC and RxLevSC are measured signal levels on the BCCH carriers of the neighbour and serving cell, resp., which are reported by the MS to the serving BTS/network. The TA and power budget thresholds (InnOutAreaTAThr, InnOutAreaRxLevThr) are adjustable operation and maintenance (O&M) parameters.

The proposed method may be based on cost functions. The target is to find orthogonal TS/MAIO assignments between interfering cells of different sites. This is achieved by introducing penalties for all TS in the cell where the call is set up. The penalty terms are taken into account by the DMA algorithm searching for the optimum TS/MAIO combination for the new call. The penalty terms for $TS_i$ , i=0...7 in the serving cell are calculated by taking into account the present TS/MAIO allocations in the interfering neighbour cells of a different site:

```
for i=0 to 7
cost_i = 0
for j=1 to NumMAIO
        cost_i = cost_i + α
        end

end
```

The cost term $\alpha$ of the TS/MAIO assignment being evaluated depends on the MS location in both the serving and the interfering cell, as follows:

1. MS located in the inner area of the serving cell

| MS located in the interfering neighbor cell of different site | Cost value $\alpha$ assigned |
|---|---|
| No MS present | 0 |
| Inner area | Low (L) |
| Outer area | Medium (M) |

2. MS located in outer area of the serving cell

| MS located in the interfering neighbor cell of different site | Cost value assigned |
|---|---|
| No MS present | 0 |
| Inner area | Medium (M) |
| Outer area | High (H) |

These calculations are performed at least for the strongest (dominant) interfering cell (i.e. the neighbour cell with the maximum power budget). If also additional interfering cells shall be taken into account their contribution to the $cost_i$ for $TS_i$ is given by:

$$cost_{i\ total} = \beta_1 * cost_{i\ NC1} + \beta_2 * cost_{i\ NC2} + ... + \beta_k * cost_{i\ NCk}$$

where:

- the weighting coefficients $\beta_1 ... \beta_k$ are related to the relative strength of the interfering neighbour cell measured by the MS the serving cell. The same weighting coefficients $\beta_1 ... \beta_k$ are used for all TS.
- $cost_i NC1 ... cost_{i\ NCk}$ are the cost terms calculated for the respective interfering neighbour cells using above tables.

In case of burst synchronized instead of Frame Number synchronized sites the "same timeslot" signifies that burst offsets between sites are taken into account.

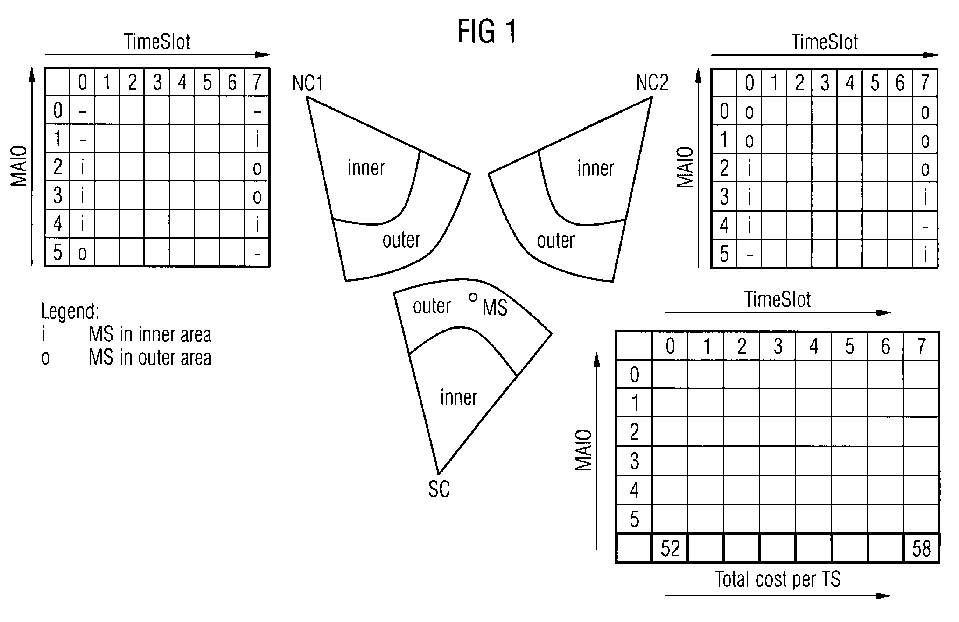

In the example of FIG 1, a system with 6 hopping frequencies per site, i.e. with 6 MAIOs available per site, is considered.

Furthermore, two dominant interfering neighbouring cells (NC1 and NC2) are assumed, whereby NC2 is a twice stronger interfering cell than NC1. The power budget criterion is used for ranking the interfering cells.

The TS/MAIO allocation tables of NC1 and NC2 at the time of a call setup in the serving cell contain information about the MSs locations in the interfering cells, e.g.:

- (-) indicates that this TS/MAIO pair is idle,
- (i) indicates that this TS/MAIO pair is used to serve an MS located in the inner area of the interfering cell,
- (o) indicates that this TS/MAIO pair is used to serve a MS located in the outer area of the interfering cell.

The new call request in the serving cell for example has been identified to be located in the outer area.

Calculation of the costs for $TS_1$:

$$Cost_{0\ NC1} = 0+0+M+M+M+H = 3*M+H,$$

$$Cost_{0\ NC2} = H+H+M+M+M+0 = 2*H+3*M.$$

Calculation of the costs for $TS_8$:

$$Cost_{7\ NC1} = 0+M+H+H+M+0 = 2*H+2*M,$$

$$\text{Cost}_{7\ NC2} = H+H+H+M+0+M=3*H+2*M.$$

As mentioned above for the calculation of the total costs per TS, the choice of the weighting coefficients $\beta_i$ relates to the relative strength of the interferer. Thus, according to the assumption that NC2 is twice stronger than NC1 one can choose e.g. $\beta_1 =1$, $\beta_2 = 2*\beta_1 =2$.

Calculations of the total costs for $TS_1$ and $TS_8$:

$$\text{cost}_{0\ total} = \beta 1*\text{cost}_{1\ NC1} + \beta_2*\text{cost}_{1\ NC2} =$$

$$1*(3*M+1*H)+2*(3*M+2*H)=9*M+5*H,$$

$$\text{Cost}_{7\ total} = \beta_1*\text{cost}_{8\ NC1} + \beta_2*\text{cost}_{8\ NC2} = 1* (2*M+2*H) +$$

$$2*(2*M+3*H)=6*M+8*H.$$

For M = 3 and H = 5, the total cost for $TS_1$ amounts to 52 while that of $TS_8$ is 58.

Since $\text{cost}_1$ total < $\text{cost}_8$ total , DMA in the serving cell should choose for the new call request in the outer area $TS_1$ instead of $TS_8$, if only this criterion would be in use. Additional criteria are described later on.

The result/consequence of this strategy is that by self-organization in a particular cell mobile stations located in the outer area are preferably grouped on a certain set of TS while mobile stations located in the inner area are preferably grouped on another (disjoint) set of TS. In other words inner and outer area mobile stations are allocated on orthogonal timeslots.

This TS orthogonalization can also be observed by comparison of TS/MAIO matrices of mutually interfering cells. Mobile stations located in the inner area of a victim cell are served on timeslots used for mobiles located in the outer area of the enemy cell, and vice versa mobile stations located in the outer area of a victim cell are served on timeslots used for mobile stations located in the inner area of the enemy cell.

The overall cost for timeslot TS in the serving cell due to inter-site interference shall be denoted $C_{total\_intersite}$ (TS) in the following.

Intra-site interference reduction strategy:

The above described DMA calculate on a site level costs relating to:

- Adjacent Channel Interference from a neighbour (co-sited) sector ($ACI_n$)
- Adjacent Channel Interference from the own sector ($ACI_o$)
- Co-channel Interference from a neighbour (co-sited) sector ($CCI_n$)

The different types of intra-site interference are assigned cost factors as follows:

- ($ACI_n$)     low cost (L)
- ($ACI_o$)     medium cost (M)
- ($CCI_n$)     high cost (H).

Co-channel interference in the same sector shall be absent. The location of the MS is not considered, and the cost terms L, M and H might be different from the above mentioned inter-site cost terms. This strategy leads to a cost term $C_{intra-site}$ (TS/MAIO) for each possible TS/MAIO combination in the serving cell. The new call is assigned to the TS/MAIO combination with the lowest costs.

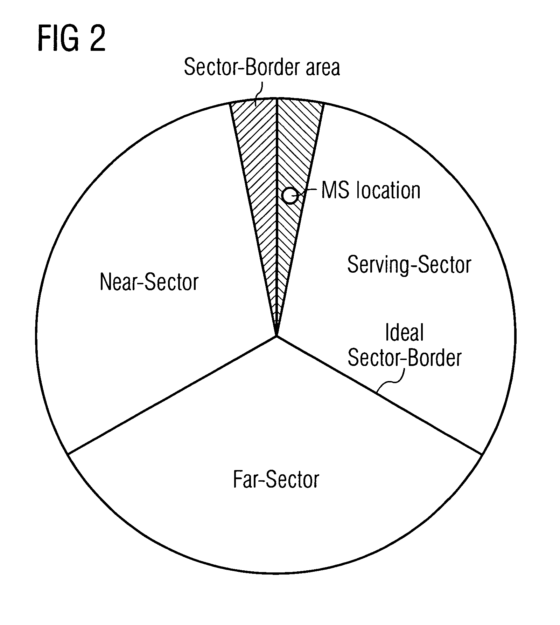

This strategy shall be extended because a MS located in the grey area of two adjacent sectors in the example of FIG 2 is significantly more affected by $ACI_n$ and $CCI_n$ from the near-sector than from the far-sector. Therefore, the cost factors shall be extended as follows:

- ACI from neighbour "far" sector - ($ACI_{nfar}$) - low cost (L)
- ACI from neighbour "near" sector - ($ACI_{nnear}$) - low to medium cost (LM)
- ACI from own sector - ($ACI_o$) - medium cost (M)
- CCI from neighbour "far" sector - ($CCI_{nfar}$) - medium to high cost (MH)

- CCI from neighbour "near" sector - ($CCI_{nnear}$) - high cost (H)

For the enhanced DMA intra-site algorithm a MS located in the grey area of FIG 2 may be identified by the negative power budget criterion as follows:

$$- PBGT = -(RxLevNC - RxLevSC) < NearSecThr$$

wherein NearSecThr is an O&M parameter. Preferably the value of NearSecThr should be less than the handover (HO) margin set for the respective adjacent sectors.

Grouping method:

A further enhancement of the intra-site DMA algorithm supporting the inter-site strategy according to the invention consist of a grouping method.

An additional cost term besides ACI and CCI is introduced, which in the following is termed GCF (grouping cost factor).

For each timeslot $TS_i$, i=1...8, $GCF_i$ is calculated as follows:

```
for i=1 to 8
GGF_i = 0
for j=1 to NumMAIO
        GCF_i = GCF_i + γ
        end
end
```

The cost term $\gamma$ is evaluated as follows:

1. New MS located in inner area of the serving cell

| MS location in the neighbor sector of the same site | Cost value $\gamma$ assigned |
|---|---|
| No MS present | M |
| Inner area | Low (L) |
| Outer area | High (H) |

2. MS located in outer area of the serving cell

| MS location in the neighbor sector of the same site | Cost value $\gamma$ assigned |
|---|---|
| No MS present | M |
| Inner area | High (H) |
| Outer area | Low (L) |

The total cost for a specific TS/MAIO combination to be assigned to a new call request is calculated as follows:

$$C(TS/MAIO) = C_{\text{int } rasite}(TS/MAIO) + k_1 * GCF(TS) + k_2 * C_{total\_\text{int } ersite}(TS)$$

MS moving from inner to outer / outer to inner concentric MAIO area might cause an Intra-cell handover that would trigger the described algorithm again. This shall be settable by O&M parameter. Nevertheless, the current location of each MS (either inner or outer area) is known by the EIR-DMA algorithm.

In all cost terms the power reduction of each MS could be considered for refinement of the overall strategy.

The invention relies in the extension of existing DMA by the following features:

1. Improvement of intra-site interference reduction by special treatment of MS located at the borders of co-sited sectors.

2. Introduction of concentric MAIO distinguishing between inner and outer cell area. The outer cell area contains the MS close to the cell borders.

3. Orthogonalisation of the TS/MAIO assignment matrices belonging to interfering sites by automatic self-organizing and self-adapting algorithms.

4. Achieving DFCA like performance even with random FH with considerably less computational and implementation efforts. The drawbacks of cyclic hopping are avoided.

5. Considerably higher robustness by avoiding correlated collisions (100% co-channel interference possible) due to potential inefficiency in the MAIO allocation algorithm associated with cyclic FH in synchronized networks.

6. Since the proposed method is based on random FH, both frequency and interference diversity are preserved.

7. Control efforts of the EIR-DMA by O&M are minimal due to automatic self-organization. Network-Planning is not affected.

## Claims

1. Method for assigning transmission parameters to mobile stations in a radio communication system, **characterised in that**
a cell (SC) of a base station is devided into at least two areas (inner,outer), and
at least one transmission parameter (MAIO,TimeSlot,TS) is assigned to a mobile station (MS) depending on the location of the mobile station (MS) in one of the at least two cell areas (inner,outer,Serving-Sector) of the base station, wherein the assigned at least one transmission parameter (MAIO,TimeSlot,TS) is determined based on the usage of at least one corresponding transmission parameter (MAIO,TimeSlot) in an area (inner,outer) of at least one neighbouring cell (NC1,NC2,Near-Sector).

2. Method according to claim 1, wherein
the at least two areas (inner,outer) of the cell (SC,NC1,NC2) are determined based on a distance to the base station and/or transmission power requirements and/or a timing advance and/or a determined negative power budget.

3. Method according to claim 1 or 2, wherein
offsets between transmission time frame numbers of the neighbouring cells (SC,NC1,NC2) are known.

4. Method according to one of the preceding claims, wherein a frequency hopping sequence is randomly assigned to the mobile station (MS).

5. Method according to one of the preceding claims, wherein the transmission parameter consists of a MAIO and/or a timeslot in a time frame.

6. Method according to one of the preceding claims, wherein the transmission parameter are determined based on cost functions.

7. Base station system of a radio communication system, with means for deviding a cell (SC) of a base station into at least two areas (inner,outer), and
means for assigning at least one transmission parameter (MAIO,TimeSlot,TS) to a mobile station (MS) depending on the location of the mobile station (MS) in one of the at least two cell areas (inner,outer,Serving-Sector) of the base station, wherein the assigned at least one transmission parameter (MAIO,TimeSlot,TS) is determined based on the usage of at least one corresponding transmission parameter (MAIO,TimeSlot) in an area (inner,outer) of at least one neighbouring cell (NC1,NC2,Near-Sector,Far-Sector).

8. Base station system according to claim 7, wherein the at least one neighbouring cell is a cell (Near-Sector,Far-Sector) of the base station or a cell (NC1,NC2) of a neighbouring base station.

# FIG 1

EP 1 578 159 A1

**TimeSlot** (NC1)

| MAIO | 0 | 1 | 2 | 3 | 4 | 5 | 6 | 7 |
|---|---|---|---|---|---|---|---|---|
| 0 | - |   |   |   |   |   |   | - |
| 1 | - |   |   |   |   |   |   | i |
| 2 | i |   |   |   |   |   |   | o |
| 3 | i |   |   |   |   |   |   | o |
| 4 | i |   |   |   |   |   |   | i |
| 5 | o |   |   |   |   |   |   | - |

**TimeSlot** (NC2)

| MAIO | 0 | 1 | 2 | 3 | 4 | 5 | 6 | 7 |
|---|---|---|---|---|---|---|---|---|
| 0 | o |   |   |   |   |   |   | o |
| 1 | o |   |   |   |   |   |   | o |
| 2 | i |   |   |   |   |   |   | o |
| 3 | i |   |   |   |   |   |   | i |
| 4 | i |   |   |   |   |   |   | - |
| 5 | - |   |   |   |   |   |   | i |

NC1, NC2, SC

inner, outer

outer °MS, inner

Legend:
i    MS in inner area
o    MS in outer area

**TimeSlot**

| MAIO | 0 | 1 | 2 | 3 | 4 | 5 | 6 | 7 |
|---|---|---|---|---|---|---|---|---|
| 0 |   |   |   |   |   |   |   |   |
| 1 |   |   |   |   |   |   |   |   |
| 2 |   |   |   |   |   |   |   |   |
| 3 |   |   |   |   |   |   |   |   |
| 4 |   |   |   |   |   |   |   |   |
| 5 |   |   |   |   |   |   |   |   |
|   | 52 |   |   |   |   |   |   | 58 |

Total cost per TS

# FIG 2

Sector-Border area

MS location

Near-Sector

Serving-Sector

Ideal
Sector-Border

Far-Sector

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | EP 0 546 720 A (MOTOROLA INC)<br>16 June 1993 (1993-06-16)<br>* page 4, lines 9-12 *<br>* page 4, lines 36-40 *<br>* page 4, lines 43-55 *<br>* page 5, lines 50-56 *<br>* page 6, lines 3-6 *<br>* page 6, lines 14-20 *<br>* page 7, lines 3-5 *<br>----- | 1-5,7,8<br><br>6 | H04Q7/36 |
| X<br><br>Y | GB 2 285 900 A (MOTOROLA LTD)<br>26 July 1995 (1995-07-26)<br><br>* page 3, line 35 - page 4, line 2 *<br>* page 4, lines 33-35 *<br>* page 5, lines 4-35 *<br>* page 6, line 34 - page 8, line 20 *<br>* page 9, lines 14-31 *<br>----- | 1-5,7,8<br><br>6 | |
| Y | WO 00/51384 A (ANDERSON NICHOLAS ; HEATH STEVEN (GB); MOTOROLA LTD (GB); OWEN RAXMOND) 31 August 2000 (2000-08-31)<br>* page 4, lines 25,26 *<br>* page 5, lines 22-24 *<br>* page 6, lines 13-15 *<br>* page 9, lines 28,29 *<br>* page 16, lines 20-23 *<br>----- | 6 | TECHNICAL FIELDS SEARCHED (Int.Cl.7)<br><br>H04Q |

The present search report has been drawn up for all claims

| Place of search | Date of completion of the search | Examiner |
|---|---|---|
| The Hague | 4 August 2004 | Chimet, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 00 6708

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2004

| Patent document cited in search report | | Publication date | Patent family member(s) | | Publication date |
|---|---|---|---|---|---|
| EP 0546720 | A | 16-06-1993 | DE | 69226012 D1 | 30-07-1998 |
| | | | DE | 69226012 T2 | 17-12-1998 |
| | | | EP | 0546720 A1 | 16-06-1993 |
| | | | US | 5430761 A | 04-07-1995 |
| GB 2285900 | A | 26-07-1995 | NONE | | |
| WO 0051384 | A | 31-08-2000 | GB | 2347317 A | 30-08-2000 |
| | | | AU | 3154100 A | 14-09-2000 |
| | | | WO | 0051384 A1 | 31-08-2000 |

EPO FORM P0459

For more details about this annex : see Official Journal of the European Patent Office, No. 12/82